# EUROPEAN PATENT APPLICATION

(11) **EP 2 775 669 A1**
(43) Date of publication of application: **10.09.2014**
(21) Application number: 12792571.7
(22) Date of filing: 01.04.2012
(51) Int. Cl.: H04L 12/437

(54) **ETHERNET RING PROTECTION SWITCHING METHOD, NODE AND SYSTEM**

(30) Priority: 23.11.2011 WO PCT/CN2011/082760
(71) Applicant: Huawei Technologies Co., Ltd., Shenzhen, Guangdong 518129 (CN)
(72) Inventor: XIE, Rong, Shenzhen Guangdong 518129 (CN); HUANG, Yiqing, Shenzhen Guangdong 518129 (CN); LONG, Hao, Shenzhen Guangdong 518129 (CN)
(74) Representative: Pfenning, Meinig & Partner GbR
(86) International application number: PCT/CN2012/073491
(87) International publication number: WO 2012/163173

(57) **Abstract**

Embodiments of the present invention disclose an Ethernet ring protection switching method, node, and system, which relate to the field of communications technologies and are capable of switching a service transmission path according to a link bandwidth condition to maximize the service capacity of an Ethernet ring network. The method of the present invention includes: determining, according to bandwidth information of a current link and bandwidth information of another link on a ring, whether the current link is a lower-bandwidth link; if the current link is a lower-bandwidth link, blocking a port corresponding to the current link; and if the current link is not a lower-bandwidth link, enabling the port corresponding to the current link. The embodiments of the present invention are mainly used in an Ethernet ring protection switching process.

## Description

### TECHNICAL FIELD

The present invention relates to the field of communications technologies, and in particular, to an Ethernet ring protection switching method, node, and system.

### BACKGROUND

The Ring Automatic Protection Switching (Ring Automatic Protection Switching, R-APS) protocol is generally used to switch a faulty link on an Ethernet ring network to ensure the reliability of a network link and therefore protect an Ethernet service.

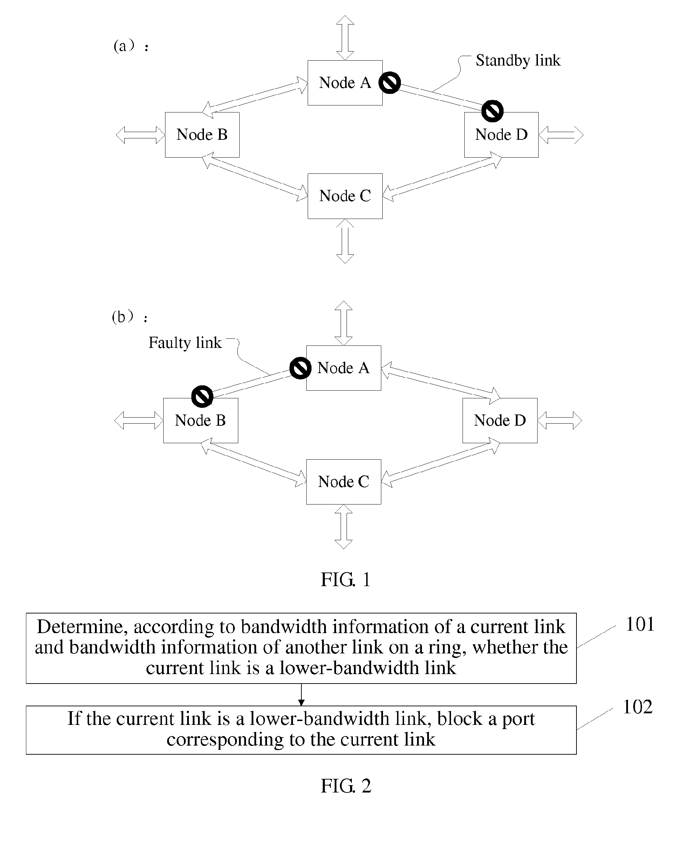

A traditional ring protection switching method is Ethernet ring network protection switching (Ethernet Ring Protection Switching, ERPS). According to the method, R-APS protocol packets are mutually sent between various nodes based on the R-APS protocol, and therefore protocol interworking and protection switching are implemented between various nodes on a ring network. Specifically, at least one link on an Ethernet ring network is set as a standby link. As shown in FIG. 1(a), a link between nodes A and D is a standby link RPL (Ring Protection Link, ring protection link), and node A is a master node (RPL Owner, RPL owner) for ring protection switching. In a normal working state, ports of nodes A and D at the standby side are blocked, so that services are transmitted through ports of nodes A and D at the other side. In this case, a service transmission path may be A↔B↔C↔D. When a link or node on the Ethernet ring network becomes faulty, as shown in FIG. 1(b), when a link between nodes A and B becomes faulty, the ports of nodes A and D are unblocked, so that a service that cannot be transmitted through the faulty link A↔B is transmitted through a path A↔D↔C↔B, thereby protecting service transmission on the Ethernet ring network based on ring protection switching.

During the implementation of the Ethernet ring protection switching, the inventor finds at least the following problems in the prior art: Ring protection switching can be triggered only in the case of a link failure or manual forced switching, and when a bandwidth of a link decreases, a standby link with a higher bandwidth cannot be used for transmission. As a result, the service capacity of a ring network cannot be maximized.

### SUMMARY

Embodiments of the present invention provide an Ethernet ring protection switching method, node, and system, which are capable of switching a service transmission path according to a link bandwidth condition to maximize the service capacity of an Ethernet ring network.

To achieve the foregoing objective, the embodiments of the present invention adopt the following technical solutions:

An Ethernet ring protection switching method, including:
determining, according to bandwidth information of a current link and bandwidth information of another link on a ring, whether the current link is a lower-bandwidth link; and
if the current link is a lower-bandwidth link, blocking a port corresponding to the current link.

A node, participating in a ring protection switching application of a current ring network, including:
a link determining unit, configured to determine, according to bandwidth information of a current link and bandwidth information of another link on a ring, whether the current link is a lower-bandwidth link; and
a blocking unit, configured to block a port corresponding to the current link if the link determining unit determines that the current link is a lower-bandwidth link.

An Ethernet ring protection switching system, including at least three nodes, where:
the nodes constitute a ring network by using links on the nodes, transmit data on the ring network, and participate in current ring protection switching; and
the nodes are configured to determine, according to bandwidth information of a current link and bandwidth information of another link on a ring, whether the current link is a lower-bandwidth link and block a port corresponding to the current link if the current link is a lower-bandwidth link.

According to the Ethernet ring protection switching method, node, and system provided in the embodiments of the present invention, whether a current link is a lower-bandwidth link is determined for each node to determine whether to block the current link. Compared with the technology in the prior art, in which ring protection switching can be triggered only in the case of a link failure or manual forced switching, a lower-bandwidth link can be adaptively blocked according to a bandwidth change and a higher-bandwidth link can be selected as a working link, thereby making full use of the idle bandwidth on a standby link, improving network bandwidth utilization, and maximizing the service capacity of the Ethernet ring network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an Ethernet ring protection switching system described in the background;
FIG. 2 is a flowchart of an Ethernet ring protection switching method according to Embodiment 1 of the present invention;
FIG. 3 is a flowchart of an Ethernet ring protection switching method according to Embodiment 2 of the present invention;
FIG. 4 is a flowchart of another Ethernet ring protection switching method according to Embodiment 3 of the present invention;
FIG. 5 is a schematic diagram of an Ethernet ring protection switching application scenario according to Embodiment 4 of the present invention;
FIG. 6 is a schematic diagram of an Ethernet ring protection switching application scenario according to Embodiment 5 of the present invention;
FIG. 7 is a schematic diagram of an Ethernet ring protection switching application scenario according to Embodiment 6 of the present invention;
FIG. 8 is a schematic structural diagram of a node according to Embodiment 7 of the present invention; and
FIG. 9 is a schematic structural diagram of another node according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

An embodiment of the present invention provides an Ethernet ring protection switching method, as shown in FIG. 2, including:
101. Determine, according to bandwidth information of a current link and bandwidth information of another link on a ring, whether the current link is a lower-bandwidth link.

The bandwidth information of the current link may be the bandwidth information corresponding to a port with the lowest bandwidth among ports on a current node that participate in current ring protection switching. Correspondingly, the bandwidth information of the another link may be determined in the same way. It should be noted that a node on a network constituted by various nodes may simultaneously participate in multiple Ethernet ring network instances and the current node may have multiple ports. According to the description of the present invention, only nodes in one of the Ethernet ring network instances and links and ports belonging to the Ethernet ring network instance are described. The nodes, links, or ports belonging to other Ethernet ring network instances do not participate in a ring protection switching mechanism of the Ethernet ring network instance and are not considered in the ring protection switching instance solution. The embodiment of the present invention may be applied to any node of a same ring protection switching instance, that is, the current node may be any node of the same ring protection switching instance. According to the description of the present invention, the link may be a physical link or virtual link; and the link bandwidth may be a bandwidth of a physical link or a bandwidth of a virtual link, that is, a bandwidth of a physical link assigned to an Ethernet ring network instance.

The bandwidth information of the another link on the ring includes at least one of the following: bandwidth information of another link on the current node, bandwidth information about a link on another node and received from the another node, and bandwidth information about a link on another node and stored in a ring network bandwidth database of the current node. The bandwidth information about the link on the another node and received from the another node is borne in a bandwidth information packet, the bandwidth information packet further includes link location information, and the link location information includes node information and/or port information.

Specifically, the bandwidth information of the current link is compared with the bandwidth information of the another link to determine whether the current link is a lower-bandwidth link on the ring network. When only the link bandwidth information is compared, and if multiple links with the same lowest bandwidth exist on the ring network and the current link is one of the links, the link location information, such as physical addresses and names of nodes, may be compared to determine whether the current link should be given a priority as a lower-bandwidth link.
102. If the current link is a lower-bandwidth link, block a port corresponding to the current link.

A node may have multiple ports, and some of the ports are used in other Ethernet ring network instances. The port corresponding to the current link is a port that is on the current node and participates in the current ring protection switching, that is, a port that is on the current node and belongs to the current Ethernet ring network instance. The port generally refers to a virtual port corresponding to the current Ethernet ring network instance.

Port blocking refers to preventing data traffic from passing through the port and is generally implemented by setting forwarding table filtering. Certainly, it may also be implemented in another manner, such as directly disabling the port, which is not limited herein.

Further optionally, if the current link is in a blocked state and a lower-bandwidth link whose bandwidth is lower than that of the current link exists on the ring, the method further includes:
103. If the current link is not a lower-bandwidth link, enable the port corresponding to the current link.

If the current link is not a lower-bandwidth link, it indicates that there is another link with a lower bandwidth on the same ring network, and a node where the lower-bandwidth link is located blocks its own link. The current node can provide a higher link bandwidth, and therefore a link that is on the current node and participates in the current ring protection switching is enabled.

According to the Ethernet ring protection switching method provided in the embodiment of the present invention, whether a current link is a lower-bandwidth link is determined for each node to determine whether to block the current link. Compared with the technology in the prior art, in which ring protection switching can be triggered only in the case of a link failure or manual forced switching, a lower-bandwidth link can be adaptively blocked according to a bandwidth change and a higher-bandwidth link can be selected as a working link, thereby making full use of the idle bandwidth on a standby link, improving network bandwidth utilization, and maximizing the service capacity of the Ethernet ring network.

### Embodiment 2

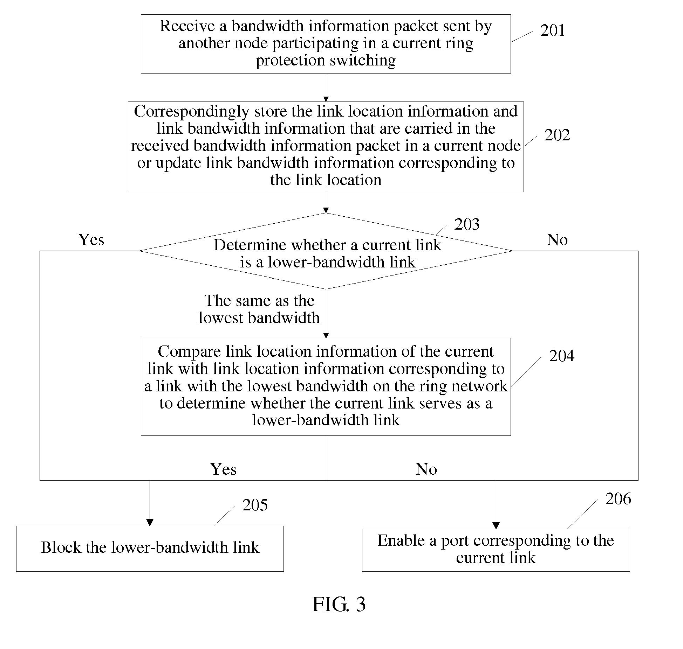

An embodiment of the present invention provides an Ethernet ring protection switching method, as shown in FIG. 3, including:
201. Receive a bandwidth information packet sent by another ring node.

The bandwidth information packet includes link location information and link bandwidth information of a link on the another ring node.

The bandwidth information packet may include a bandwidth change packet and a node online packet and is in a packet form extended based on the R-APS protocol. Two fields "Bandwidth information" and "Port number" are added to an existing R-APS packet. "Bandwidth information" is used to carry link bandwidth information, and "Port number" is used in combination with an existing node ID (Node ID) field to describe specific link location information. It should be noted that the link location information may also be roughly described by using the existing "Node ID" field. That is, only a node where a link is located, instead of a specific link, is described. Therefore, the "Port number" field is an optional field.

Table 3 shows a bandwidth information packet format extended based on an R-APS protocol packet.

**Table 3**

| 1 | | 2 | | | | 3 | 4 |
|---|---|---|---|---|---|---|---|
| Request field (request) | Sub-code (sub-code) | Status (Status) | | | | Node ID (Node ID) | |
| | | RB | DNF | BPR | Reserved status field (status reserved) | | |
| Node ID (Node ID) | | | | | | | |
| Port number (optional) | | | | | | | |
| Bandwidth information | | | | | | | |
| Remaining reserved field | | | | | | | |

In an R-APS protocol packet after extension, two newly-added request fields are further defined. As shown in Table 4, they are a code 1001 used to identify link bandwidth degradation on a node and a code 1000 used to identify that a node is online.

**Table 4**

| Field (field) | Value (value) | Description (description) |
|---|---|---|
| Request field (request) | 1101 | Forced switching (forced switch) |
| | 1110 | Event (event) |
| | 1011 | Signal failure (signal fail) |
| | 1001 | Bandwidth degradation (bandwidth degradation) |
| | 1000 | Node online (node online) |
| | 0111 | Manual switching (manual switch) |
| | 0000 | No request (no request) |
| | Other (Other) | Reserved for future extension of international standards |

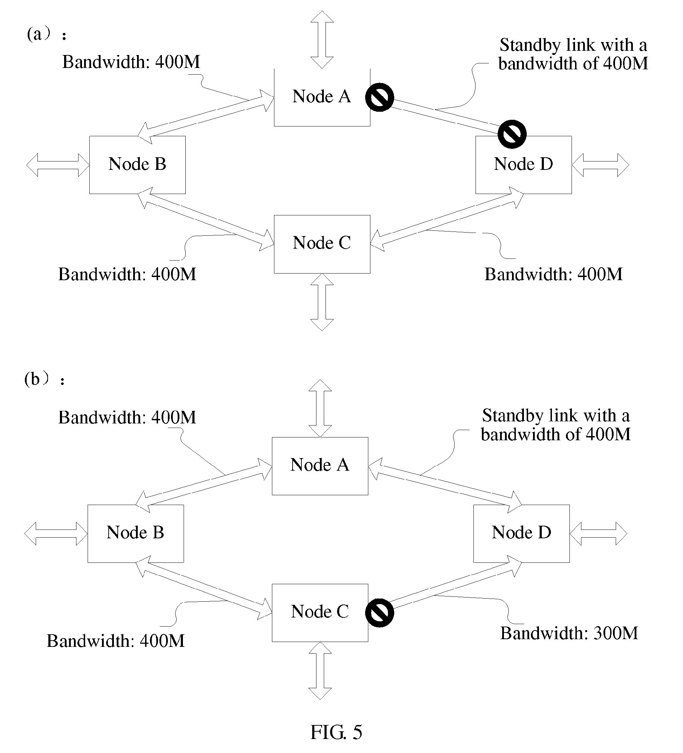

In FIG. 5, for example, a bandwidth of a link C↔D decreases due to adaptive modulation of microwaves between nodes C and D, and node C may send another node an R-APS message carrying a "Bandwidth degradation" request, node ID information of node C, a port number corresponding to node C on the link C↔D, and bandwidth information of the link C↔D after the change. In other embodiments, a decrease in a link bandwidth may be caused by another reason, such as a link aggregation (Link Aggregation, LAG) group member failure on a link, which is not limited herein.
202. Correspondingly store the link location information and link bandwidth information that are carried in the received bandwidth information packet in a current node.

A ring network bandwidth database may be preset for each node on an Ethernet ring network. A ring network bandwidth database of the current node may store link location information and link bandwidth information that are corresponding to a link on another node on the ring network and may also store link location information and link bandwidth information of the current node. If the ring network bandwidth database already includes information of a corresponding link, it only needs to update link bandwidth information corresponding to the link location. It should be noted that, to save storage space, the ring network bandwidth database may only store link location information and link bandwidth information that are corresponding to a link with the lowest bandwidth on the ring network.

If the ring network bandwidth database of the current node only stores the link location information and link bandwidth information that are corresponding to the link with the lowest bandwidth, a specific implementation method may be: determining, through comparison and after receiving a bandwidth information packet sent by another node on a current ring network, a link with the lowest bandwidth according to the link location information and link bandwidth information that are carried in the bandwidth information packet. If bandwidths are the same, a link with the smallest node ID may serve as the link with the lowest bandwidth. Link location information and link bandwidth information that are corresponding to the link with the lowest bandwidth that is obtained through comparison are stored in the ring network bandwidth database of the current node. For example, current node A receives bandwidth information packets of other nodes in sequence. After receiving a bandwidth information packet of node B, node A stores bandwidth information and node information of node B in its memory as a ring network bandwidth database. Then, after receiving a bandwidth information packet of node C, node A compares bandwidth information and node information of node C with the bandwidth information and node information of node B that have been recorded in its memory. If the bandwidth of node B is lower, node A may not record relevant information of node C; if the bandwidth of node C is lower, node A replaces relevant information of node B that has been stored in its memory with the relevant information of node C. Similarly, node A always records only the bandwidth information and node information corresponding to a node with the lowest bandwidth among other nodes.
203. Compare bandwidth information of a current link with bandwidth information that is about another link and has been stored on the current node to determine whether the current link is a lower-bandwidth link; if the bandwidth of the current link is the same as the lowest bandwidth in the ring network bandwidth database, perform step 204; if the current link is a lower-bandwidth link, perform step 205; and if the current link is not a lower-bandwidth link, perform step 206.

It should be noted that if the ring network bandwidth database of the current node only records the link location information and link bandwidth information that are corresponding to the node with the lowest bandwidth among other nodes in step 202, the link bandwidth information of the current node may be compared directly with the link bandwidth information recorded uniquely in the ring network bandwidth database to determine whether the current link is a lower-bandwidth link on the ring network in step 203.
204. Compare link location information of the current link with the link location information corresponding to the link with the lowest bandwidth on the ring network to determine a link to be blocked first, that is, to determine whether the current link serves as a lower-bandwidth link.

If the link with the lowest bandwidth on the ring network cannot be determined through bandwidth comparison in step 203, the link to be blocked first may be selected from links with the lowest bandwidth through further comparison of other information. Further determination may be performed according to link location information, such as port information, a node ID, a node name, and a physical location where a node is located. For example, an R-APS protocol packet after extension carries IDs of various nodes, and the node IDs are stored in the ring network bandwidth database. If bandwidths of two nodes are 300 Mbps, according to node ID values, a link corresponding to a smaller node ID value may be selected as a lower-bandwidth link and blocked.

The current node may have multiple ports, and a bandwidth corresponding to a port with a lower bandwidth on the current node is used to send a bandwidth change packet or a node online packet. Therefore, during port blocking, a port that is on the current node and has a lower bandwidth may also be blocked correspondingly. For example, as shown in FIG. 3, after node C is determined as the node with the lowest bandwidth, node C compares bandwidths of its two ports. The bandwidth of an eastward port is 300 Mbps, and the bandwidth of a westward port is 400 Mbps. A comparison result is that the bandwidth of the eastward port is lower, and therefore the eastward port on node C may be blocked.

Further, if the bandwidths of two ports participating in current ring protection switching on the current node are the same, a port to be blocked first may further be determined according to port information corresponding to the two ports, and the port serves as the lower-bandwidth port. For example, after node C is determined as the node with the lowest bandwidth, node C compares bandwidths of its two ports. Both the bandwidth of the eastward port and that of the westward port are 200 Mbps, and a port to be blocked cannot be determined. In this case, the ID: 00000001 of the eastward port may be compared with the ID: 00000010 of the westward port, and a comparison result is that the ID of the eastward port is lower. Therefore, the eastward port may serve as a lower-bandwidth port to be blocked.
205. Block the lower-bandwidth link.

A method for blocking the lower-bandwidth link may specifically be: after the current node blocks the port with the lowest bandwidth, where only one end of a link with the lowest bandwidth is blocked, sending, by the current node, a link blocking message to the other end of the link to instruct a node at the other end of the link to block a corresponding port. For example, as shown in FIG. 3, node C detects that its link bandwidth is the lowest in the ring network, determines that a port with the lowest bandwidth on node C is the eastward port, and accordingly blocks the eastward port on node C. In addition, optionally, node C sends a link C↔D blocking message to node D, and node D blocks its westward port after receiving the blocking message.
206. Enable a port corresponding to the current link.

Specifically, a method for enabling the port corresponding to the current link is: determining whether the port corresponding to the current link has been blocked. If the port corresponding to the current link has been blocked, blocking of the blocked port is stopped. If the port corresponding to the current link is not blocked, a relevant ring protection switching operation may not need to be performed. Since it has been determined in step 203 that the current link on the current node is not a lower-bandwidth link, the bandwidth of the blocked port on the current node may also be fully used. This enables a link with a higher bandwidth on the ring network and blocks a link with a lower bandwidth on the ring network.

It should be understood that when on an ERPS ring a forced switching (forced switch, FS) command delivered by a user is received or a link failure (Signal Fail, SF) warning is detected, a ring protection switching mechanism may give a priority to the forced switching and SF warning, and a node does not trigger ring protection switching based on a bandwidth change notification. In addition, when a link fails, the ring protection switching mechanism may also detect a bandwidth change packet that corresponds to a node whose link fails and is broadcast by the node in the ring so as to report that a link bandwidth of the node is 0. When the failed link is restored, the node re-broadcasts a bandwidth change packet to report a current link bandwidth of the node.

According to the Ethernet ring protection switching method provided in the embodiment of the present invention, whether a current link is a lower-bandwidth link is determined for each node to determine whether to block the current link. Compared with the technology in the prior art, in which ring protection switching can be triggered only in the case of a link failure or manual forced switching, a lower-bandwidth link can be adaptively blocked according to a bandwidth change and a higher-bandwidth link can be selected as a working link, thereby making full use of the idle bandwidth on a standby link, improving network bandwidth utilization, and maximizing the service capacity of the Ethernet ring network.

### Embodiment 3

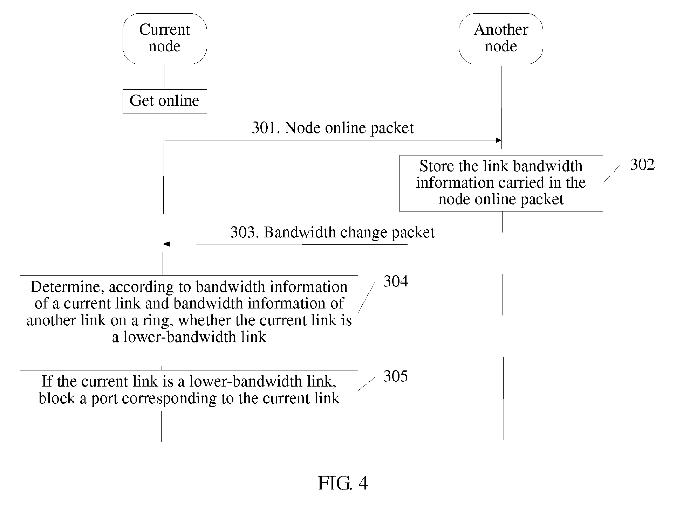

In this embodiment, each node on a same ring network may update a ring network bandwidth database of the node in time and add a node just getting online to a ring protection switching mechanism by exchanging a bandwidth information packet, where the bandwidth information packet includes a node online packet. As shown in FIG. 4, an Ethernet ring protection switching method may include:
301. When a current node gets online, the current node broadcasts a node online packet of the current node to another node. The node online packet includes a node online ID and link location information and link bandwidth information of the current node.

Before the current node gets online, a ring network bandwidth database of another node on the ring network has no relevant information of the current node. Therefore, when getting online, the current node may broadcast the node online packet to the another node on the ring network. The node online packet includes the link location information and link bandwidth information of the current node.

In addition, the link location information and link bandwidth information of the current node refer to link location information and link bandwidth information that are corresponding to a lower-bandwidth link among ring links of the current node. A method for determining the link bandwidth information of the current node may specifically be: selecting a port with the lowest bandwidth according to a bandwidth corresponding to each port on the current node, and if the bandwidths are the same, further selecting a port with a smaller port ID as the port with the lowest bandwidth according to port IDs. The bandwidth corresponding to the port with the lowest bandwidth on the current node is selected as the link bandwidth information of the current node and is written into a bandwidth change packet, node online packet, or ring network bandwidth database corresponding to the current node.
302. After receiving the node online packet, the another node stores the link bandwidth information carried in the node online packet.

Specifically, the another node identifies the node online packet by using a node online ID (that is, a request field 0001) in the packet and store, in its ring network bandwidth database, relevant information that corresponds to a node currently getting online and is carried in the node online packet.

Alternatively, the another node compares the link location information and link bandwidth information of the current node with information of the lowest bandwidth stored in its ring network bandwidth database and only stores relevant information corresponding to a lower-bandwidth link in its ring network bandwidth database.
303. The another node sends a bandwidth information packet to the current node.

Specifically, because the ring network bandwidth database corresponding to the current node has no relevant information of the another node, after receiving the node online packet, the another node on the ring network may further send the bandwidth information packet to return its link location information and link bandwidth information to the current node, so that the current node receives and stores the link location information and link bandwidth information of the another node or updates a local ring network bandwidth database according to the link location information and link bandwidth information of the another node.
304. The current node determines whether a current link on the current node is a lower-bandwidth link according to bandwidth information of the current link and bandwidth information of another link on a ring.
305. If the link on the current node is a lower-bandwidth link, block a port corresponding to the link.

It should be noted that for specific descriptions of some steps in the embodiment of the present invention, reference may be made to corresponding content of other embodiments. No details are provided in the embodiment of the present invention.

According to the Ethernet ring protection switching method provided in the embodiment of the present invention, whether a current link is a lower-bandwidth link is determined for each node to determine whether to block the current link. Compared with the technology in the prior art, in which ring protection switching can be triggered only in the case of a link failure or manual forced switching, a lower-bandwidth link can be adaptively blocked according to a bandwidth change and a higher-bandwidth link can be selected as a working link, thereby making full use of the idle bandwidth on a standby link, improving network bandwidth utilization, and maximizing the service capacity of the Ethernet ring network.

In addition, a ring network bandwidth database is updated by exchanging bandwidth information packets, so that ring protection switching may be performed according to the latest link bandwidth information. This improves the timeliness and accuracy of the ring protection switching.

### Embodiment 4

To facilitate understanding of the technical solutions of the present invention by a person skilled in the art, an embodiment of the present invention exemplarily describes an Ethernet ring protection switching method with reference to FIG. 5 when link bandwidth degradation occurs on a link on a ring network. Specific descriptions are as follows:

In an Ethernet ring network scenario shown in FIG. 5, nodes A, B, C, and D form a ring topology, and one or more Ethernet ring protection instances are configured on the ring topology. Here a single instance is taken as an example. In the Ethernet ring protection instance, a link between node A and node D is configured as a ring protection link (RPL, Ring Protection Link). In a normal state, a bandwidth of each link on the ring is 400 Mbps (megabit per second), and each node stores ring network link bandwidth information, including bandwidth information of another link on the current ring or bandwidth information of a link with the lowest bandwidth (where the current lowest link bandwidth is 400 Mbps) on the current ring. In addition, a port of the ring protection link between node A and node D is blocked to avoid a traffic loop. When bandwidth degradation occurs on a link between nodes C and D and the bandwidth decreases to 300 Mbps, protection switching processing on node C, for example, is as follows:
401. Node C detects that the bandwidth of the link C↔D decreases to 300 Mbps.
402. Node C determines, according to the stored ring network link bandwidth information, that the link C↔D is a lower-bandwidth link in a current condition.
403. Node C blocks a ring network port corresponding to the link C↔D and sends a ring network automatic protection switching R-APS message.

Specifically, the ring network automatic protection switching R-APS message carries a "Bandwidth degradation" request field, link bandwidth information, and link location information. Specific descriptions are as follows:

"Bandwidth degradation" request field: It is used to indicate that a current R-APS message results from a link bandwidth degradation event on the ring, where a request code may be defined for the indication.

Link bandwidth information: It is used to indicate a bandwidth of a link after "Bandwidth degradation" occurs on the link.

Link location information: It is used to indicate a location of a link where "Bandwidth degradation" occurs, where the link location may be indicated by using a node ID and port information. Specific descriptions are as follows:
Node ID: It represents information about a node where a link is located (where the information already exists in an existing R-APS message).
Port ID: It describes a link corresponding to a port on the node corresponding to the node ID. It should be noted that this field is an optional field, and therefore the link location may also be roughly identified by using "Node ID" only.

In addition, in other embodiments, if a port of a link B↔C on node C is blocked, a corresponding port is enabled.

In addition, in other embodiments, if node C determines that the link C↔D is not a lower-bandwidth link in a current condition, only the foregoing R-APS message is sent, but no port is blocked.
404. After receiving the R-APS message sent by node C, another node on the ring performs the following processing:

For a node (that is, node B) having no blocked port, if the node determines that a link bandwidth corresponding to each port on it is greater than a link bandwidth carried in the R-APS message, it does not need to perform any operation for its ports. For a node (that is, node A or node D, and node A is taken as an example herein) having a blocked port, if node A determines that a link bandwidth corresponding to each port on it is greater than the link bandwidth carried in the R-APS message, it enables the blocked port.

Further, if a ring node maintains a ring network bandwidth database, data in the ring network bandwidth database needs to be updated.

### =>> Switching ends.

According to the Ethernet ring protection switching method provided in the embodiment of the present invention, when link bandwidth degradation occurs on a single link, a lower-bandwidth link can be blocked and a higher-bandwidth link can be enabled by comparing link bandwidth information, thereby improving network bandwidth utilization and maximizing the service capacity of an Ethernet ring network.

### Embodiment 5

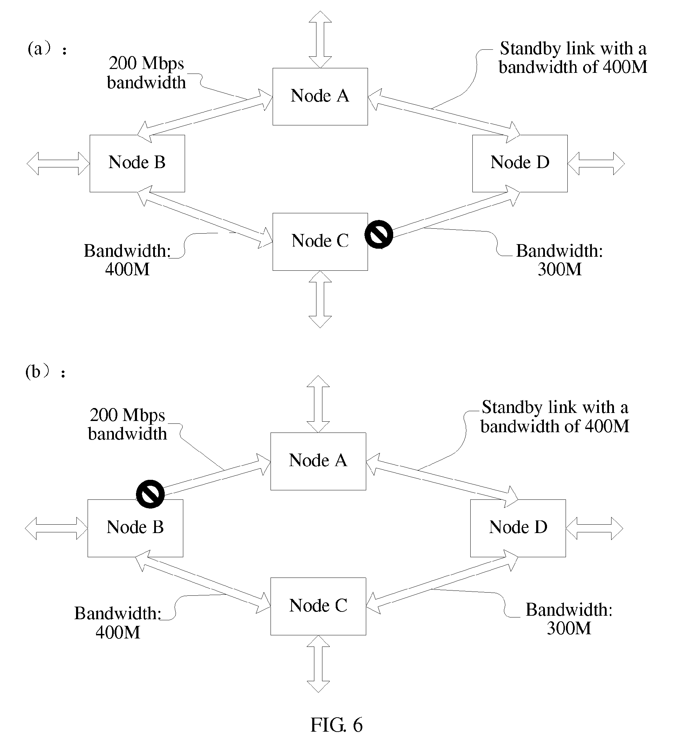

Embodiment 4 describes a scenario where bandwidth degradation occurs on a single link. An embodiment of the present invention exemplarily provides an Ethernet ring protection switching method with reference to FIG. 6 and describes a scenario where bandwidth degradation occurs on multiple links. As shown in FIG. 6, following Embodiment 4, after bandwidth degradation occurs on the link C↔D, bandwidth degradation also occurs on a link between nodes A and B, and the bandwidth of the link A↔B decreases to 200 Mbps. A ring protection switching process is as follows:
501. Node B (or node A, node B is taken as an example herein) detects that the bandwidth of the link A↔B decreases to 200 Mbps, blocks a port corresponding to the link A↔B, and sends an R-APS message. The details are as follows:

Node B detects that the bandwidth of the link A↔B decreases to 200 Mbps, compares the bandwidth with lowest bandwidth information of a ring network link stored in a ring network bandwidth database on the node, where the lowest bandwidth is 300 Mbps, so as to determine that the bandwidth of the link A↔B is lower. Then, node B blocks a corresponding port and sends an R-APS message. The message content is similar to that in the foregoing embodiment.

It should be noted that, in other embodiments, if the bandwidth of the link A↔B after bandwidth degradation is still greater than the lowest link bandwidth of the ring network in the ring network bandwidth database, no port blocking operation is required.
502. After receiving the R-APS message sent by node B, another node on the ring performs the following processing:

For a node (for example, node A) having no blocked port, if the node determines that a link bandwidth corresponding to each port on it is greater than a link bandwidth carried in the R-APS message, it does not need to perform any operation for its ports. For a node (node C is taken as an example) having a blocked port, if node C determines that a link bandwidth corresponding to each port on it is greater than the link bandwidth carried in the R-APS message, it enables the blocked port.

Further, if a ring node maintains a ring network bandwidth database, data in the ring network bandwidth database needs to be updated.

### =>> Switching ends.

According to the Ethernet ring protection switching method provided in the embodiment of the present invention, when link bandwidth degradation occurs on multiple links in succession, a lower-bandwidth link can be blocked and a higher-bandwidth link can be enabled by comparing link bandwidth information, thereby improving network bandwidth utilization and maximizing the service capacity of an Ethernet ring network.

### Embodiment 6

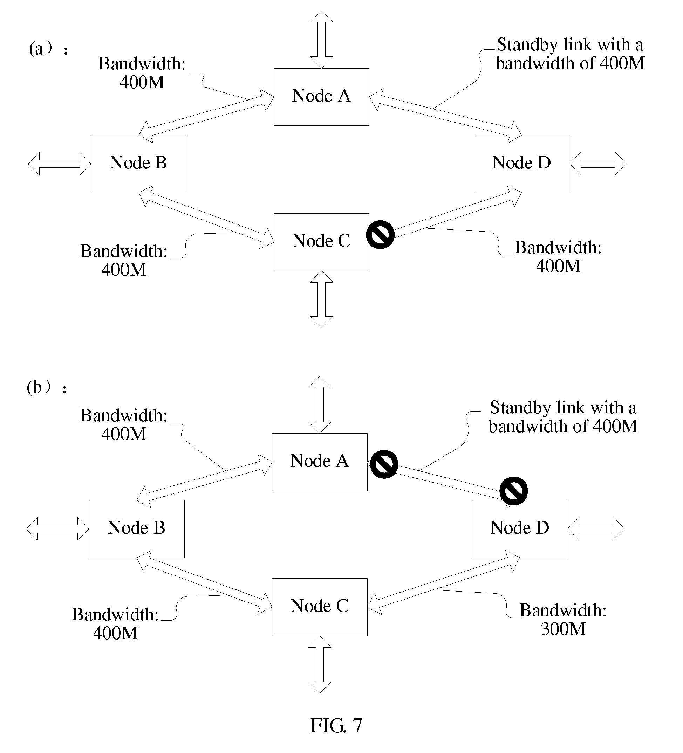

An embodiment of the present invention exemplarily provides a ring protection switching method with reference to FIG. 7 and describes a switching condition when a link is restored. As shown in FIG. 7, following Embodiment 4, after the bandwidth of the link C↔D degrades to 300 Mbps, the bandwidth of the link C↔D is restored to 400 Mbps herein. A switching process is as follows:
601. After detecting that the link bandwidth is restored, node C stops sending an R-APS packet carrying a "Bandwidth degradation" request field and sends a protection switching packet (an R-APS(NR) message) carrying no request.
602. After receiving the R-APS(NR) message sent by node C, another node on the ring performs the following processing:

A master node (an RPL node, for example, node A) enters a blocking preparation (WTR) state and starts a WTR timer; when the WTR timer times out, the master node blocks an RPL port and sends a ring protection link blocking packet (an R-APS(NR, RB) message) with no request. It should be noted that an RPL owner node refers to a master node on a ring network and when a bandwidth of each link on the ring is restored, a port on the master node is blocked to avoid a traffic loop.

Optionally, when a node maintains a ring network bandwidth database, the node further needs to update the data in the ring network bandwidth database after receiving the R-APS(NR), that is, deletes a corresponding entry or updates the corresponding entry with an initial maximum bandwidth value.
603. After receiving the R-APS(NR, RB) message, node C enables the blocked port and stops sending the R-APS(NR) message.

According to the Ethernet ring protection switching method provided in the embodiment of the present invention, when the bandwidth of a blocked link is restored, a lower-bandwidth link can be blocked and a higher-bandwidth link can be enabled by comparing link bandwidth information, thereby improving network bandwidth utilization and maximizing the service capacity of an Ethernet ring network.

### Embodiment 7

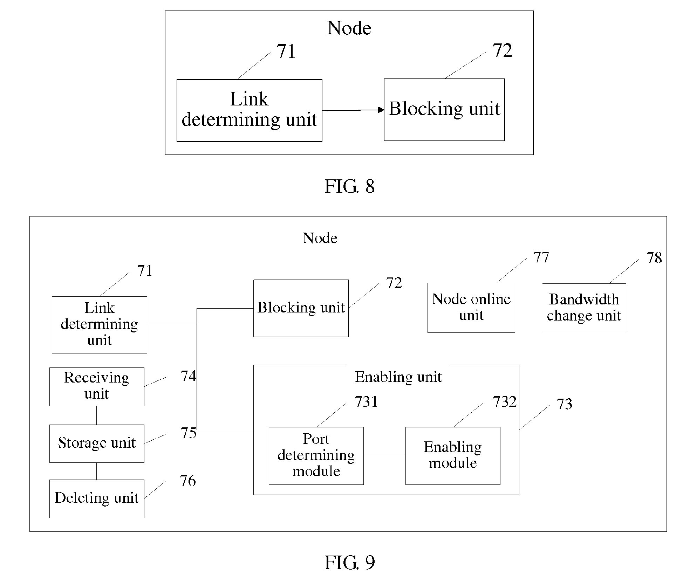

An embodiment of the present invention provides a node, which may be applied to an Ethernet ring to implement ring protection switching. As shown in FIG. 8, the node includes a link determining unit 71 and a blocking unit 72.

The link determining unit 71 is configured to determine, according to bandwidth information of a current link and bandwidth information of another link on a ring, whether the current link is a lower-bandwidth link.

The blocking unit 72 is configured to block a port corresponding to the current link if the link determining unit 71 determines that the current link is a lower-bandwidth link.

Further, as shown in FIG. 9, the node further includes an enabling unit 73.

The enabling unit 73 is configured to enable the port corresponding to the current link if the link determining unit 71 determines that the current link is not a lower-bandwidth link.

The bandwidth information of the another link on the ring may include at least one of the following: bandwidth information of another link on the current node, bandwidth information about a link on another node and received from the another node, and bandwidth information about a link on another node and stored in a ring network bandwidth database of the current node. The bandwidth information about the link on the another node and received from the another node is borne in a bandwidth information packet, the bandwidth information packet further carries link location information corresponding to the link bandwidth information, and the link location information includes node information and/or port information.

Further, the node further includes a receiving unit 74 and a storage unit 75.

The receiving unit 74 is configured to receive the bandwidth information packet sent by the another node.

The bandwidth information packet includes link location information and link bandwidth information that are corresponding to a link on a node that sends the bandwidth information packet.

The storage unit 75 is configured to correspondingly store, in a ring network bandwidth database, the link location information and link bandwidth information that are carried in the bandwidth information packet received by the receiving unit 74 or update link bandwidth information corresponding to the link location.

Further, the receiving unit 74 is further configured to receive a no-request protection switching packet that is sent by the another node and complies with the Ring Automatic Protection Switching R-APS protocol.

Correspondingly, the node further includes a deleting unit 76.

The deleting unit 76 is configured to delete corresponding information from the ring network bandwidth database according to link location information carried in the no-request protection switching packet.

Further optionally, the storage unit 75 is further configured to store, according to the link location information and link bandwidth information that are carried in the bandwidth information packet, link location information and link bandwidth information that are corresponding to different link locations into the ring network bandwidth database.

Optionally, the storage unit 75 is further configured to determine a link with the lowest bandwidth among all links on the ring according to the link location information and link bandwidth information that are carried in the bandwidth information packet; and store link location information and link bandwidth information that are corresponding to the link with the lowest bandwidth into the ring network bandwidth database.

The bandwidth information packet is a Ring Automatic Protection Switching R-APS protocol packet.

Further, the link determining unit 71 is further configured to compare, if a bandwidth of the current link is the same as the lowest bandwidth of the another link on the ring, link location information of the current link with link location information corresponding to the lowest bandwidth of the another link on the ring to determine a link to be blocked first as a lower-bandwidth link.

Further, the enabling unit 73 includes a port determining module 731 and an enabling module 732.

The port determining module 731 is configured to determine whether the port corresponding to the current link has been blocked.

The enabling module 732 is configured to stop, if the port determining module 731 determines that the port corresponding to the current link has been blocked, blocking the blocked port.

The enabling module 732 is further configured to perform, if the port determining module 731 determines that the port corresponding to the current link is not blocked, no relevant ring protection switching operation.

In this embodiment, the bandwidth information packet includes a bandwidth change packet and/or a node online packet.

Further, the node further includes a node online unit 77 and a bandwidth degradation unit 78.

The node online unit 77 is configured to broadcast a node online packet of the current node to the another node when the current node gets online, where the node online packet includes a node online ID and the link location information and link bandwidth information of the current node.

The bandwidth degradation unit 78 is configured to broadcast a bandwidth degradation packet of the current node to the another node when bandwidth degradation occurs on a link of the current node, where the bandwidth degradation packet includes a bandwidth degradation ID and location information and bandwidth information of the link where the bandwidth degradation occurs on the current node.

Location information and link bandwidth information of the link where a bandwidth change occurs on the current node are link location information and link bandwidth information that are corresponding to a link with the lowest bandwidth among links on the current node.

Further, the bandwidth change unit 78 is further configured to broadcast, when the current node receives a node online packet sent by another node, a bandwidth information packet of the current node to the another node, so that the another node that sends the node online packet updates the ring network bandwidth database according to the bandwidth information packet.

It should be noted that for specific descriptions of some functional modules of a node provided in the embodiment of the present invention, reference may be made to corresponding content in other embodiments. No details are provided in the embodiment of the present invention.

The embodiment of the present invention further provides an Ethernet ring protection switching system, including at least three nodes.

The system may have multiple ring networks, and a node on these ring networks participates in current ring protection switching to maximize bandwidth utilization.

Specifically, the nodes constitute a ring network by using links on the nodes, transmit data on the ring network, and participate in the current ring protection switching.

The nodes are configured to determine, according to bandwidth information of a current link and bandwidth information of another link on a ring, whether the current link is a lower-bandwidth link; if the current link is a lower-bandwidth link, block a port corresponding to the current link; and if the current link is not a lower-bandwidth link, enable a port corresponding to the current link.

It should be noted that for descriptions of nodes and various functional modules of the nodes in the Ethernet ring protection switching system provided in the embodiment of the present invention, reference may be made to corresponding content in other embodiments. No details are provided in the embodiment of the present invention.

According to the nodes and Ethernet ring protection switching system provided in the embodiment of the present invention, whether a current link is a lower-bandwidth link is determined for each node to determine whether to block the current link. Compared with the technology in the prior art, in which ring protection switching can be triggered only in the case of a link failure or manual forced switching, a lower-bandwidth link can be adaptively blocked according to a bandwidth change and a higher-bandwidth link can be selected as a working link, thereby making full use of the idle bandwidth on a standby link, improving network bandwidth utilization, and maximizing the service capacity of the Ethernet ring network.

According to the description about the embodiments, a person skilled in the art may be clearly aware that the present invention may be implemented using software plus necessary universal hardware, and definitely may also be implemented using hardware, but in most cases, the present invention is preferably implemented using the former method. Based on such an understanding, the technical solutions of the present invention essentially or the part contributing to the prior art may be implemented in the form of a software product. The computer software product is stored in a readable storage medium and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An Ethernet ring protection switching method, comprising:
determining, according to bandwidth information of a current link and bandwidth information of another link on a ring, whether the current link is a lower-bandwidth link; and
if the current link is a lower-bandwidth link, blocking a port corresponding to the current link.

2. The protection switching method according to claim 1, further comprising:
if the current link is not a lower-bandwidth link, enabling the port corresponding to the current link.

3. The protection switching method according to claim 1, wherein the bandwidth information of the another link on the ring comprises bandwidth information of another link on a current node.

4. The protection switching method according to claim 1, wherein the bandwidth information of the another link on the ring comprises bandwidth information about a link on another node and received from the another node.

5. The protection switching method according to claim 1, wherein the bandwidth information of the another link on the ring comprises bandwidth information about a link on another node and stored in a ring network bandwidth database of a current node.

6. The protection switching method according to claim 4, wherein the bandwidth information about the link on the another node and received from the another node is borne in a bandwidth information packet.

7. The protection switching method according to claim 6, wherein the bandwidth information packet further carries link location information corresponding to the link bandwidth information.

8. The protection switching method according to claim 7, wherein the link location information comprises node information and/or port information.

9. The protection switching method according to claim 7, further comprising:
receiving the bandwidth information packet sent by the another node; and
correspondingly storing the link location information and link bandwidth information that are carried in the bandwidth information packet in a ring network bandwidth database or updating link bandwidth information corresponding to the link location.

10. The protection switching method according to claim 9, further comprising:
receiving a no-request protection switching packet that is sent by the another node and complies with the Ring Automatic Protection Switching R-APS protocol; and
deleting corresponding information from the ring network bandwidth database according to link location information carried in the no-request protection switching packet.

11. The Ethernet ring protection switching method according to claim 9, wherein the correspondingly storing the link location information and link bandwidth information that are carried in the bandwidth information packet in a ring network bandwidth database comprises:
storing, according to the link location information and link bandwidth information that are carried in the bandwidth information packet, link location information and link bandwidth information that are corresponding to different link locations into the ring network bandwidth database.

12. The Ethernet ring protection switching method according to claim 9, wherein the correspondingly storing the link location information and link bandwidth information that are carried in the bandwidth information packet in a ring network bandwidth database comprises:
determining a link with the lowest bandwidth among all links on the ring according to the link location information and link bandwidth information that are carried in the bandwidth information packet; and
storing link location information and link bandwidth information that are corresponding to the link with the lowest bandwidth into the ring network bandwidth database.

13. The protection switching method according to claim 6, wherein the bandwidth information packet is a Ring Automatic Protection Switching R-APS protocol packet.

14. The Ethernet ring protection switching method according to claim 1 or 2, wherein the determining, according to bandwidth information of a current link and bandwidth information of another link on a ring, whether the current link is a lower-bandwidth link further comprises:
comparing, if a bandwidth of the current link is the same as the lowest bandwidth of the another link on the ring, link location information of the current link with link location information corresponding to the lowest bandwidth of the another link on the ring to determine a link to be blocked first as a lower-bandwidth link.

15. The Ethernet ring protection switching method according to claim 6, wherein the bandwidth information packet comprises a node online packet, the method further comprising:
broadcasting the node online packet to the another node when the current node gets online, wherein the node online packet comprises a node online ID and the link location information and link bandwidth information of the current node.

16. The Ethernet ring protection switching method according to claim 6, wherein the bandwidth information packet comprises a bandwidth change packet, the method further comprising:
broadcasting the bandwidth change packet of the current node to the another node when a bandwidth change occurs on a link of the current node, wherein the bandwidth change packet comprises a bandwidth change ID and location information and bandwidth information of the link where the bandwidth degradation occurs on the current node.

17. The Ethernet ring protection switching method according to claim 15 or 16, wherein location information and bandwidth information of the link where the bandwidth degradation occurs on the current node are link location information and link bandwidth information that are corresponding to a link with the lowest bandwidth among links of the current node.

18. The Ethernet ring protection switching method according to claim 15, further comprising:
broadcasting, when the current node receives the node online packet sent by the another node, a bandwidth information packet of the current node to the another node, so that the another node updates a ring network bandwidth database according to the bandwidth information packet.

19. A node, participating in a ring protection switching application of a current ring network, comprising:
a link determining unit, configured to determine, according to bandwidth information of a current link and bandwidth information of another link on a ring, whether the current link is a lower-bandwidth link; and
a blocking unit, configured to block a port corresponding to the current link if the link determining unit determines that the current link is a lower-bandwidth link.

20. The node according to claim 19, further comprising:
an enabling unit, configured to enable the port corresponding to the current link if the link determining unit determines that the current link is not a lower-bandwidth link.

21. The node according to claim 19, wherein the bandwidth information of the another link on the ring comprises bandwidth information of another link on a current node.

22. The node according to claim 19, wherein the bandwidth information of the another link on the ring comprises bandwidth information about a link on another node and received from the another node.

23. The node according to claim 19, wherein the bandwidth information of the another link on the ring comprises bandwidth information about a link on another node and stored in a ring network bandwidth database of a current node.

24. The node according to claim 22, wherein the bandwidth information about the link on the another node and received from the another node is borne in a bandwidth information packet.

25. The node according to claim 24, wherein the bandwidth information packet further carries link location information corresponding to the link bandwidth information.

26. The node according to claim 25, wherein the link location information comprises node information and/or port information.

27. The node according to claim 25, further comprising:
a receiving unit, configured to receive the bandwidth information packet sent by the another node; and
a storage unit, configured to correspondingly store the link location information and link bandwidth information that are carried in the bandwidth information packet received by the receiving unit in a ring network bandwidth database or update link bandwidth information corresponding to the link location.

28. The node according to claim 27, further comprising:
the receiving unit, further configured to receive a no-request protection switching packet that is sent by the another node and complies with the Ring Automatic Protection Switching R-APS protocol; and
a deleting unit, configured to delete corresponding information from the ring network bandwidth database according to link location information carried in the no-request protection switching packet.

29. The node according to claim 27, wherein the storage unit is further configured to store, according to the link location information and link bandwidth information that are carried in the bandwidth information packet, link location information and link bandwidth information that are corresponding to different link locations into the ring network bandwidth database.

30. The node according to claim 27, wherein the storage unit is further configured to:
determine a link with the lowest bandwidth among all links on the ring according to the link location information and link bandwidth information that are carried in the received bandwidth information packet; and
store link location information and link bandwidth information that are corresponding to the link with the lowest bandwidth into the ring network bandwidth database.

31. The node according to claim 24, wherein the bandwidth information packet is a Ring Automatic Protection Switching R-APS protocol packet.

32. The node according to claim 19 or 20, wherein the link determining unit is further configured to compare, if a bandwidth of the current link is the same as the lowest bandwidth of the another link on the ring, link location information of the current link with link location information corresponding to the lowest bandwidth of the another link on the ring to determine a link to be blocked first as a lower-bandwidth link.

33. The node according to claim 24, wherein the bandwidth information packet comprises a node online packet, the node further comprising:
a node online unit, configured to broadcast the node online packet to the another node when the current node gets online, wherein the node online packet comprises a node online ID and the link location information and link bandwidth information of the current node.

34. The node according to claim 24, wherein the bandwidth information packet comprises a bandwidth change packet, the node further comprising:
a bandwidth change unit, configured to broadcast the bandwidth change packet to the another node when a bandwidth change occurs on a link of the current node, wherein the bandwidth change packet comprises a bandwidth change ID and location information and bandwidth information of the link where the bandwidth degradation occurs on the current node.

35. The node according to claim 33 or 34, wherein location information and bandwidth information of the link where the bandwidth degradation occurs on the current node are link location information and link bandwidth information that are corresponding to a link with the lowest bandwidth among links of the current node.

36. The node according to claim 33, wherein the bandwidth change unit is further configured to broadcast, when the current node receives a node online packet sent by another node, the bandwidth information packet to the another node, so that the another node that sends the node online packet updates a ring network bandwidth database according to the bandwidth information packet.

37. An Ethernet ring protection switching system, comprising at least three nodes according to any one of claims 19-36; wherein:
the nodes constitute a ring network by using links on the nodes, transmit data on the ring network, and participate in current ring protection switching.
